# EUROPÄISCHE PATENTSCHRIFT

(11) **EP 3 178 604 B1**
(45) Veröffentlichungstag und Bekanntmachung des Hinweises auf die Patenterteilung: **07.10.2020**
(21) Anmeldenummer: 16186505.0
(22) Anmeldetag: 31.08.2016
(51) Int. Cl.: B24B 5/36, B29D 30/06, B24B 5/18, B24B 19/26

(54) **VORRICHTUNG ZUM BESCHLEIFEN DER INNENSEITEN DER WULSTBEREICHE VON FAHRZEUGLUFTREIFEN**
DEVICE FOR GRINDING THE INSIDES OF THE BEADED AREAS OF VEHICLE TYRES
DISPOSITIF D'AIGUISAGE DES FACES INTERIEURES DE LA REGION DE TALON DE PNEUMATIQUES DE VEHICULE

(30) Priorität: 07.12.2015 DE 102015224404
(43) Veröffentlichungstag der Anmeldung: 14.06.2017
(73) Patentinhaber: Continental Reifen Deutschland GmbH, 30165 Hannover (DE)
(72) Erfinder: Berger, Markus, 31319 Sehnde (DE); Vlcek, Pavel, 76001 Zlin (CZ); Bremer, Jan, 31515 Wunstorf (DE); Weinhold, Hartmut, 38122 Braunschweig (DE)
(74) Vertreter: Widjaja, Wira

(56) Entgegenhaltungen:
- EP-A2- 1 839 913
- WO-A1-2013/048464
- CN-U- 203 045 452
- DE-A1-102008 026 964
- DE-A1-102012 111 454
- JP-A- 2012 045 699
- US-A- 3 953 942
- US-A- 5 313 745

## Beschreibung

Die Erfindung betrifft eine Vorrichtung zum Beschleifen der Innenseiten der Wulstbereiche von Fahrzeugluftreifen mit
- einer Positioniereinrichtung zum Positionieren des Fahrzeugluftreifens in aufrechter Lage mit einer Einrichtung zum Drehen des Fahrzeugluftreifens,
- einer Schleifeinheit, welche in horizontaler und vertikaler Richtung verstellbar und verfahrbar ist und mittels einer Neigungsverstelleinrichtung in Richtung des Inneren des Reifentorus kippbar ist,
- einem an der Schleifeinheit angeordneten, motorisch antreibbaren Schleifzylinder, dessen Außenfläche durch Verstellen der Schleifeinheit tangential zur Innenseite des Wulstbereiches ausrichtbar ist.

Es ist üblich, bei der Vulkanisation von Rohreifen in Heizpressen in das Innere des Rohreifens einen Heizbalg einzubringen, welcher den Gegendruck beim Vulkanisationsprozess erzeugt und somit ermöglicht, dass der Reifen in seiner Kontur gehalten wird. Infolge ihres Aufbaus erzeugen Heizbälge an der Innenseite des vulkanisierten Fahrzeugluftreifens umlaufende oder netzstrukturartig verlaufende Erhebungen, die an und für sich nicht störend sind. Soll der Fahrzeugluftreifen mit einem Dichtband verwendet werden, sind glatte Wulstinnenseiten erforderlich. Dichtbänder ermöglichen das Aufziehen schlauchloser Industriereifen auf Standard-Industriereifenfelgen, die normalerweise aufgrund ihres Aufbaus einen Schlauch und ein Wulstband erfordern. Ein solches Dichtband besteht aus einem Gummiring mit einem integrierten Reifenventil, sitzt auf dem zylindrischen Teil der Felge zwischen den beiden Reifenwülsten und stützt sich an den Innenseiten der Reifenwülste ab. Der wichtigste Vorteil des Dichtbandes gegenüber dem System mit Schlauch und Wulstband besteht darin, dass das Risiko einen plötzlichen Druckverlustes im Pannenfall äußerst unwahrscheinlich wird. Für einen den Innenraum des Reifens abdichtenden Sitz des Dichtbandes ist es erforderlich, dass die bei der Vulkanisation an der Innenseite der Wulstbereiche - der Kontaktflächen des Dichtbandes - entstandenen Erhebungen bzw. Unebenheiten durch Schleifen entfernt werden. Bislang ist es üblich, diese Unebenheiten von Hand aus mittels einer Handschleifmaschine herkömmlicher Bauart abzuschleifen.

Eine Vorrichtung der eingangs genannten Art ist beispielsweise aus der EP 1 839 913 A2 bekannt. Diese Vorrichtung ist vorrangig dafür vorgesehen, die innere Oberfläche eines Fahrzeugluftreifens zu schleifen, um derart den Reifen zum Aufbringen eines Fleckens vorzubereiten, sodass der Reifen beispielsweise mit verschiedenen elektronischen Vorrichtungen ausgestattet werden kann. Die Vorrichtung ermöglicht, die zum Fleckenauftrag vorgesehene Schleiftiefe genau einzustellen und gestattet eine Anpassung an unterschiedliche Reifengrößen und Reifentypen. Aus der US 3,953,952 B ist ebenfalls eine Vorrichtung der eingangs genannten Art bekannt, bei der die innere Oberfläche eines Fahrzeugluftreifens zusammen mit einem Formtrennmittel zum Ausgleichen der Oberfläche geschliffen wird. Die Vorrichtung weist eine Rahmenstruktur auf, an welcher ein mit einem Schleifrad versehenes Schwenkelement verstellbar angeordnet ist. An der Rahmenstruktur ist ferner ein gegenüber dem Schleifrad drehbarer Mechanismus angebracht, um den Fahrzeugreifen zu halten und mit einer bestimmten Umfangsgeschwindigkeit zu drehen. Die internationale Anmeldeschrift WO 2013/048464 A1 offenbart eine Vorrichtung zum Verformen und Stützen der Seitenwand eines Reifens um Komponenten auf der Reifeninnenseite anzubringen. Die DE 10 2012 111 454 A1 offenbart eine Vorrichtung zum maschinellen Abrauen der Oberfläche eines Vollgummireifens. Der Reifen wird von einer Spanneinrichtung gehalten in Drehbewegung versetzt. Die Spanneinrichtung hält und fixiert den Reifen lediglich einseitig an einem Teilbereich des Reifenbodens, wobei ein maschinell drehend angetriebenes Rauaggregat vorgesehen ist, welches mit einem Raukopf versehen ist, welcher am Reifenboden positionierbar ist und in allen Raumrichtungen variabel verstellbar ist. Aus der DE 10 2008 026 964 A1 ist eine Wulstschleifvorrichtung zum Verringern der Exzentrizität zwischen dem Mittelpunkt der Außenkontur eines Fahrzeugluftreifens und dem Mittelpunkt der Wulstkontur durch Abschleifen des Wulstes mittels eines Schleifkopfes über einen Sektor von bis zu vorzugsweise 40° bekannt. Der Schleifkopf ist auf einem entlang des Wulstes bewegbaren Schleifarm angeordnet und trägt einen motorisch antreibbaren Schleifstein. Des Weiteren ist eine den Reifen an der Innenseite des zu schleifenden Wulstes erfassende und fixierende Spanneinrichtung vorgesehen.

Der Erfindung liegt nun die Aufgabe zu Grunde, eine Vorrichtung zur Verfügung zu stellen, mittels welcher der Abschleifvorgang auf einfachere und rationellere Weise und möglichst exakt durchführbar ist.

Gelöst wird die gestellte Aufgabe erfindungsgemäß dadurch, dass die Vorrichtung eine senkrecht stehende, parallel zur Reifenachse des positionierten Fahrzeugluftreifens verstellbare Stützplatte aufweist, gegen welche der Fahrzeugluftreifen von der Schleifeinheit gedrückt wird und welche an ihrer dem Fahrzeugluftreifen zugewandten Seite reibungsarm ausgeführt ist.

Die erfindungsgemäße Vorrichtung gestattet ein definiertes Abschleifen der Innenseiten der Wulstbereiche auf rationelle Weise.

Während des Schleifvorganges wird der Reifen von der Schleifeinheit gehalten und gleichzeitig gegen die senkrecht stehende, parallel zur Reifenachse des positionierten Fahrzeugluftreifens verstellbare Stützplatte gedrückt, welche an ihrer dem Fahrzeugluftreifen zugewandten Seite reibungsarm ausgeführt ist. Zu diesem Zweck kann die Stützplatte an ihrer dem Fahrzeugluftreifen zugewandten Seite gemäß einem weiteren Merkmal mit einer Vielzahl von Allseitenrollen versehen sein.

Bei einer weiteren bevorzugten Ausführungsform der Vorrichtung ist vorgesehen, dass die Einrichtung zum Drehen des Fahrzeugluftreifens während des Abschleifens den Fahrzeugluftreifen von außen in Drehbewegung versetzt. Besonders bevorzugt ist eine Ausführung, bei der diese Einrichtung mehrere, insbesondere zwei in Drehbewegung versetzbare Rollen aufweist, auf welchen der Fahrzeugluftreifen achsparallel positioniert wird.

Die Schleifeinheit weist gemäß einer weiteren, vorteilhaften Ausführungsvariante der Erfindung neben dem motorisch antreibbaren Schleifzylinder an ihrer Halterung in achsparalleler Ausrichtung zur Drehachse des Schleifzylinders zwei freilaufende Rollen auf, von welchen die eine in Schleifrichtung vor dem Schleifzylinder, die andere hinter dem Schleifzylinder angeordnet ist. Die vorlaufende Rolle hat dabei die Funktion einer Führungsrolle und ist derart an der Halterung angeordnet, dass sie den zu schleifenden Bereich tangential kontaktiert.

Die zweite, nachlaufende Rolle bestimmt die Schleiftiefe und ist derart an der Halterung angeordnet, dass sie den bereits geschliffenen Bereich kontaktiert und daher gegenüber der anderen Rolle um die erwähnte Schleiftiefe versetzt ist. Beide Rollen sind vorteilhafterweise an der Halterung elastisch gelagert.

Die Schleifeinheit weist ferner erfindungsgemäß an ihrer Halterung eine weitere Rolle, nämlich eine freilaufende Andrückrolle auf, deren Drehachse bei senkrechter Ausrichtung des Schleifzylinders parallel zur Reifenachse verläuft. Die Andrückrolle wird beim Schleifvorgang mit der Wulstsitzfläche des Wulstbereiches in Kontaktgebracht und übt ebenfalls eine Haltefunktion aus. Die Außenfläche der Andrückrolle ist vorteilhafterweise konkav gebogen, sodass sich die Rolle in den erforderlichen unterschiedlichen Positionen der Schleifeinheit während des Schleifvorganges am Reifenwulst gut abstützen kann.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht einer erfindungsgemäßen Vorrichtung,
Fig. 2 eine Ansicht einer Schleifeinheit der erfindungsgemäßen Vorrichtung im Betrieb in einer möglichen Stellung,
Fig. 3 eine Ansicht der Schleifeinheit analog zu Fig. 2, jedoch in einer anderen Stellung während des Betriebes und
Fig. 4 eine Schnittdarstellung (Querschnitt) durch Bestandteile der Schleifeinheit im Betrieb.

In der nachfolgenden Beschreibung beziehen sich Begriffe wie "senkrecht", "waagrecht", "oben" und "unten" auf die Darstellungen in den Figuren.

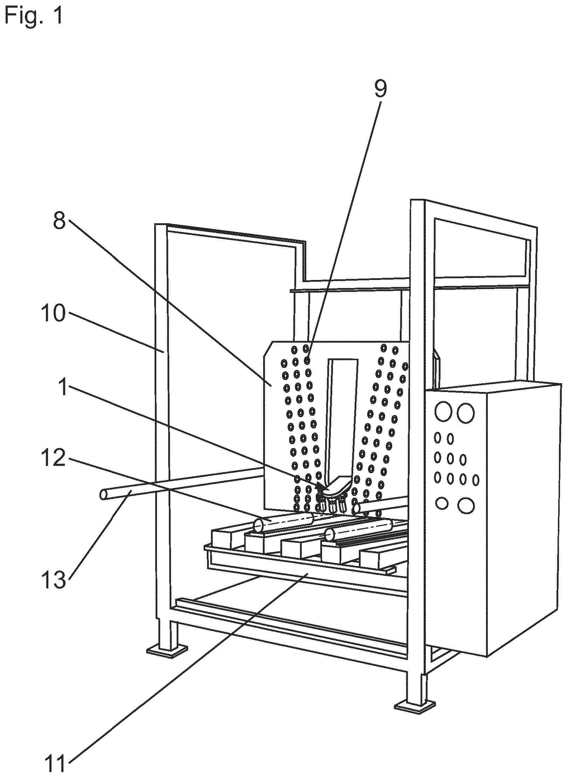

Wie Fig. 1 zeigt weist die erfindungsgemäße Vorrichtung ein Gestell 10, auf, an welchem eine waagrechte Positioniereinrichtung 11 mit vorzugsweise zwei motorisch antreibbaren Rollen 12 angeordnet ist, die parallel zueinander verlaufen und auf welchen ein Fahrzeugluftreifen aufrecht stehend, mit seiner Drehachse parallel zu den Rollen 12, positionierbar ist. Bei angetriebenen Rollen 12 wird der Fahrzeugluftreifen in Drehbewegung versetzt. Ein weiterer Bestandteil der Vorrichtung ist eine Schleifeinheit 1 zum Abschleifen der Innenseiten der Wulstbereiche des Fahrzeugluftreifens, wobei die Schleifeinheit 1, wie noch beschrieben wird, den zu beschleifenden Fahrzeugluftreifen während eines Schleifvorganges gegen eine am Gestell 10 senkrecht angeordnete Stützplatte 8 drückt.

Die Schleifeinheit 1 weist eine Halterung 1a auf, an welcher ein Schleifzylinder 2 drehbar gelagert ist, welcher mit körnigem Material beschichtet ist und mittels eines nicht dargestellten elektrischen Antriebes um seine Zylinderachse in Drehbewegung versetzbar ist. In der in Fig. 1 gezeigten Ausgangslage der Schleifeinheit 1 verläuft die Zylinderachse des Schleifzylinders 2 in vertikaler Richtung. Die Halterung 1a und daher auch der Schleifzylinder 2 sind in vertikaler Richtung (Doppelpfeil P₁) und in horizontaler Richtung - axial zum Fahrzeugluftreifen (Doppelpfeil P₂) - verstellbar und verfahrbar gelagert und mittels einer Neigungsverstelleinrichtung, die im Detail nicht dargestellt ist, in Richtung Inneres der Reifenform kippbar. Fig. 1 zeigt beispielhaft zwei Betätigungsarme 13 einer von Hand einstellbaren Neigungsverstelleinrichtung. Der "Kippwinkel" gegenüber einer Senkrechten beträgt vorzugsweise bis zu 30°. Die Verstellmöglichkeiten von Neigung, Höhe und horizontaler Lage gestatten es, den Schleifzylinder 2 in die erforderliche Position zu bringen und tangential zur Innenseite des kontaktierenden Reifenwulstes auszurichten.

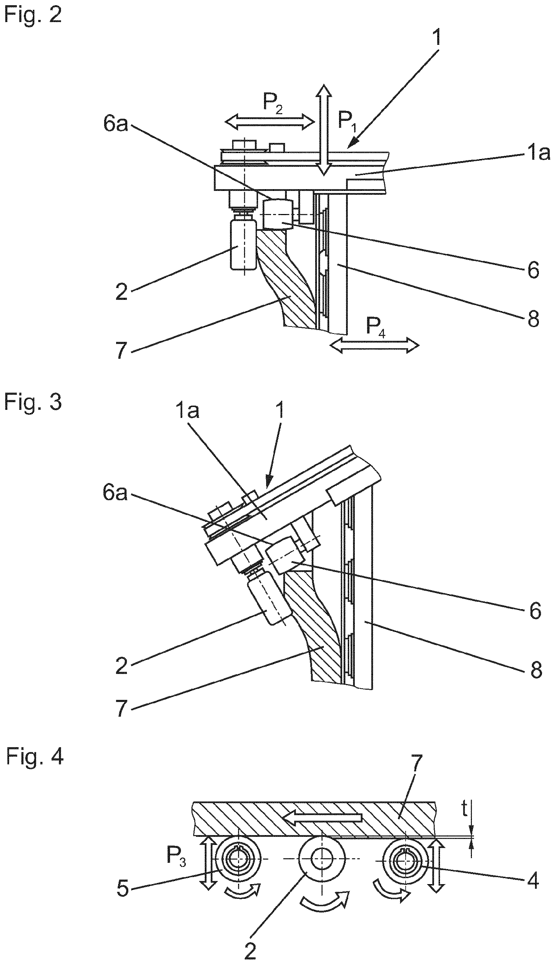

Wie Fig. 4 zeigt, umfasst die Schleifeinheit 1 ferner zwei Freilaufrollen 4, 5, deren Achsen parallel zur Achse des Schleifzylinders 2 verlaufen, welche an der Halterung 1a drehbar gelagert sind und gegenüber der Halterung 1a in Richtung des Doppelpfeiles P₃ in Fig. 4 verstellbar sind, sodass sie unter Beibehalten der Parallelität der Achsen an der Innenseite des Reifenwulstes tangential anlegbar sind, wobei die eine Freilaufrolle 4 dem Schleifzylinder 2 vorläuft und die andere Rolle 5 dem Schleifzylinder 2 nachläuft. Die Rollen 4, 5 sind einstellbar gelagert, wobei die Rolle 4 den Reifen in der gleichen Ebene tangential kontaktiert wie der Schleifzylinders 2, die Rolle 5 um die Schleiftiefe t versetzt, wie in Fig. 4 gezeigt. An der Halterung 1a ist ferner innenseitig des Schleifzylinders 2 und gegenüber diesem nach oben versetzt eine Andrückrolle 6, ebenfalls eine Freilaufrolle, drehbar gelagert, deren Drehachse im rechten Winkel zur Drehachse des Schleifzylinders 2 und in der in Fig. 1 gezeigten Betriebsstellung parallel zur Reifenachse verläuft. Die Andrückrolle 6 weist eine nach außen und somit konkav gebogene Außenfläche 6a auf. In Fig. 2 und Fig. 3 ist ferner schematisch ein Wulstbereich 7 eines Fahrzeugluftreifens eingezeichnet, in Fig. 4 ein Querschnitt ein kurzer Längsabschnitt des Wulstbereiches 7.

Zum Betrieb der Vorrichtung wird der Fahrzeugluftreifen, dessen Wulstbereiche 7 innenseitig geschliffen werden sollen, aufrecht stehend auf die Rollen 12 der Positioniereinrichtung 11 gestellt. An der Rückseite des Reifens befindet sich die Stützplatte 8, deren Lage in Richtung des Doppelpfeils P₄ in Fig. 2 verstellbar ist, um unterschiedlich breite Fahrzeugluftreifen gegenüber der Neigungsverstelleinrichtung zu positionieren. Die Stützplatte 8 ist mittig unterbrochen bzw. offen, um die Schleifeinrichtung 1 im Reifeninneren positionieren zu können. Während des Schleifvorganges wird der Fahrzeugluftreifen von der Schleifeinheit 1 bzw. dem Schleifzylinder 2 gegen die Stützplatte 8 gedrückt. Damit die Reibung zwischen der Stützplatte 8 und der Seitenwand des Fahrzeugluftreifens möglichst gering ist, ist die Stützplatte 8 mit einer Vielzahl von Allseitenrollen 9, beispielsweise Kugelrollen, versehen, an welchen der Fahrzeugluftreifen nahezu reibungsfrei ablaufen kann.

Sobald der Fahrzeugluftreifen positioniert ist, wird die Schleifeinheit 1 in den Fahrzeugluftreifen hineingefahren, abgesenkt und so weit zurückgefahren, bis der Schleifzylinder 2 und die vorlaufende Freilaufrolle 4 mit der Innenseite jenes Wulstbereiches 7 in Kontakt kommen, wobei die Andrückrolle 6 den Reifenwulst von oben kontaktiert. Der Schleifzylinder 2 wird in Betrieb genommen und gleichzeitig wird auch der Reifen in eine Drehbewegung versetzt. Nach dem ersten anfänglichen Abrieb ist die nachlaufende Freilaufrolle 5 in der gewünschten Schleiftiefe 1 positioniert und bestimmt die Schleiftiefe 1. Nach einer kompletten Drehung des Reifens ist jener Bereich der Wulstinnenseite, welcher unmittelbar an die Wulstzehe anschließt, über eine gewisse Breite angeschliffen. Die bei der Vulkanisation des Reifens durch den Heizbalg gebildeten Strukturen, beispielsweise umlaufende oder netzstrukturartig verlaufende Erhebungen, sind in diesem Bereich abgeschliffen. Um die Innenseite des Wulstbereiches 7 noch etwas weiter innen abzuschleifen, wird die Schleifeinheit 1 im erforderlichen Winkel gekippt, wobei der Schleifzylinder 2 tangential zur Innenseite des Wulstbereiches 7 ausgerichtet wird. Nun wird auch dieser vom Schleifzylinder 2 erfasste Bereich der Wulstinnenseite auf analoge Weise wie beschrieben abgeschliffen.

Der zweite Wulstbereich des Fahrzeugluftreifens wird nach einem Umdrehen und neuerlichen Positionieren des Fahrzeugluftreifens auf analoge Weise bearbeitet. Einwandfrei glatte Wulstinnenflächen sind erforderlich, um im Fahrzeugluftreifen einen sogenannten "Tire-Sealing-Ring" dicht positionieren zu können. Derartige Sealing-Ringe ermöglichen das Aufziehen schlauchloser Industriereifen auf Standard-Industriereifenfelgen, die normalerweise aufgrund ihres Aufbaus einen Schlauch und ein Wulstband erfordern. Der Tire-Sealing-Ring besteht aus einem Gummiring mit einem integrierten Reifenventil. Dieser Gummiring sitzt auf dem zylindrischen Teil der Felge, zwischen den beiden Reifenwülsten, und sorgt ohne Schlauch und Wulstband für den luftdichten Abschluss der Luftkammer im Reifen.

Die erfindungsgemäße Vorrichtung kann bei einer möglichen Weiterentwicklung zwei Schleifeinheiten in der erfindungsgemäßen Ausführung aufweisen, sodass beide Wulstbereiche des Reifens gleichzeitig beschliffen werden können.

### Bezugsziffernliste

- 1 ......................: Schleifeinheit
- 1a ....................: Halterung
- 2 ......................: Schleifzylinder
- 3 ......................: Achse
- 4, 5 ..................: Freilaufrolle
- 6 ......................: Andrückrolle
- 6a ....................: Außenfläche
- 7 ......................: Wulstbereich
- 8 ......................: Stützplatte
- 9 ......................: Allseitenrollen
- 10 ....................: Gestell
- 11 ....................: Positioniereinrichtung
- 12 ....................: Rolle
- 13 ....................: Betätigungsarm
- t.......................: Schleiftiefe
- P₁, P₂, P₃, P₄.....: Doppelpfeil

## Patentansprüche

1. Vorrichtung zum Beschleifen der Innenseiten der Wulstbereiche (7) von Fahrzeugluftreifen, mit
- einer Positioniereinrichtung (11) zum Positionieren des Fahrzeugluftreifens in aufrechter Lage mit einer Einrichtung zum Drehen des Fahrzeugluftreifens,
- einer Schleifeinheit (1), welche in horizontaler und vertikaler Richtung verstellbar und verfahrbar ist und mittels einer Neigungsverstelleinrichtung in Richtung des Inneren des Reifentorus kippbar ist,
- einem an der Schleifeinheit (1) angeordneten, motorisch antreibbaren Schleifzylinder (2), dessen Außenfläche durch Verstellen der Schleifeinheit (1) tangential zur Innenseite des Wulstbereiches (7) ausrichtbar ist,
**dadurch gekennzeichnet,**
**dass** sie eine senkrecht stehende, parallel zur Reifenachse des positionierten Fahrzeugluftreifens verstellbare Stützplatte (8) aufweist, gegen welche der Fahrzeugluftreifen von der Schleifeinheit (1) gedrückt wird und welche an ihrer dem Fahrzeugluftreifen zugewandten Seite reibungsarm ausgeführt ist.

2. Vorrichtung nach Anspruch 1, **dadurch gekennzeichnet, dass** die dem Fahrzeugluftreifen zugewandte Seite der Stützplatte (8) mit einer Vielzahl von Allseitenrollen (9) versehen ist.

3. Vorrichtung nach Anspruch 1, **dadurch gekennzeichnet, dass** die Einrichtung zum Drehen des Fahrzeugluftreifens während eines Schleifvorganges den Fahrzeugluftreifens von außen in Drehbewegung versetzt.

4. Vorrichtung nach Anspruch 1 oder 3, **dadurch gekennzeichnet, dass** die Einrichtung zum Drehen des Fahrzeugluftreifens mehrere, insbesondere zwei, in Drehbewegung versetzbare Rollen (12) aufweist, auf welchen der Fahrzeugluftreifen achsparallel positioniert wird.

5. Vorrichtung nach einem der Ansprüche 1 bis 4, **dadurch gekennzeichnet, dass** an der Halterung (1a) in achsparalleler Ausrichtung zur Drehachse des Schleifzylinders (2) zwei freilaufende Rollen (4, 5) - die eine in Schleifrichtung vor dem Schleifzylinder (2), die andere in Schleifrichtung hinter dem Schleifzylinder (2) - angeordnet sind.

6. Vorrichtung nach Anspruch 5, **dadurch gekennzeichnet, dass** die in Schleifrichtung vor dem Schleifzylinder (2) befindliche Rolle (4) derart an der Halterung (1a) angeordnet ist, dass sie den zu schleifenden Bereich tangential kontaktiert.

7. Vorrichtung nach Anspruch 5, **dadurch gekennzeichnet, dass** die in Schleifrichtung hinter dem Schleifzylinder (2) befindliche Rolle (5) derart an der Halterung (1a) angeordnet ist, dass sie den bereits geschliffenen Bereich tangential kontaktiert und daher gegenüber der anderen Rolle (4) um die Schleiftiefe (t) versetzt ist.

8. Vorrichtung nach einem der Ansprüche 1 bis 7, **dadurch gekennzeichnet, dass** an der Halterung (1a) eine freilaufende Andrückrolle (6) angeordnet ist, deren Drehachse bei senkrechter Ausrichtung des Schleifzylinders (2) parallel zur Reifenachse verläuft.

9. Vorrichtung nach Anspruch 8, **dadurch gekennzeichnet, dass** die Außenfläche (6a) der Andrückrolle (6) konkav gebogen ist.

## Claims

1. Apparatus for grinding the inner sides of the bead regions (7) of pneumatic vehicle tyres, comprising
- a positioning device (11) for positioning the pneumatic vehicle tyre in an upright position with a device for turning the pneumatic vehicle tyre,
- a grinding unit (1), which is adjustable in the horizontal and vertical directions and is movable and is tiltable in the direction of the interior of the tyre torus by means of an inclination adjusting device,
- a motorized grinding cylinder (2), which is arranged on the grinding unit (1) and the outer surface of which can be aligned tangentially with the inner side of the bead region (7) by adjusting the grinding unit (1),
**characterized**
**in that** it has a vertically upright supporting plate (8), which is adjustable parallel to the tyre axis of the positioned pneumatic vehicle tyre and against which the pneumatic vehicle tyre is pressed by the grinding unit (1) and which is of a low-friction design on its side facing the pneumatic vehicle tyre.

2. Apparatus according to Claim 1, **characterized in that** the side of the supporting plate (8) that is facing the pneumatic vehicle tyre is provided with a multiplicity of omnidirectional rollers (9).

3. Apparatus according to Claim 1, **characterized in that** the device for turning the pneumatic vehicle tyre sets the pneumatic vehicle tyre in rotational motion from the outside during a grinding operation.

4. Apparatus according to Claim 1 or 3, **characterized in that** the device for turning the pneumatic vehicle tyre has a number of rollers (12), in particular two, which can be set in rotational motion, on which the pneumatic vehicle tyre is positioned axially parallel.

5. Apparatus according to one of Claims 1 to 4, **characterized in that** two freely running rollers (4, 5) are arranged on the mounting (1a), in axially parallel alignment in relation to the axis of rotation of the grinding cylinder (2) - one upstream of the grinding cylinder (2) in the grinding direction, the other downstream of the grinding cylinder (2) in the grinding direction.

6. Apparatus according to Claim 5, **characterized in that** the roller (4) located upstream of the grinding cylinder (2) in the grinding direction is arranged on the mounting (1a) in such a way that it tangentially contacts the region to be ground.

7. Apparatus according to Claim 5, **characterized in that** the roller (5) located downstream of the grinding cylinder (2) in the grinding direction is arranged on the mounting (1a) in such a way that it tangentially contacts the already ground region, and is therefore offset with respect to the other roller (4) by the grinding depth (t).

8. Apparatus according to one of Claims 1 to 7, **characterized in that** a freely running pressing roller (6), the axis of rotation of which runs parallel to the tyre axis when the grinding cylinder (2) is in vertical alignment, is arranged on the mounting (1a).

9. Apparatus according to Claim 8, **characterized in that** the outer surface (6a) of the pressing roller (6) is concavely curved.

## Revendications

1. Dispositif pour l'aiguisage des côtés intérieurs des zones de talon (7) de pneumatiques de véhicules, comprenant :
- un appareil de positionnement (11) pour le positionnement du pneumatique de véhicule en position verticale comprenant un appareil pour la rotation du pneumatique de véhicule,
- une unité d'aiguisage (1), qui est ajustable et déplaçable en direction horizontale et verticale et qui est basculable au moyen d'un appareil d'ajustement de l'inclinaison en direction de l'intérieur du tore du pneu,
- un cylindre d'aiguisage (2) agencé sur l'unité d'aiguisage (1), entraînable par moteur, dont la surface extérieure peut être orientée tangentiellement au côté intérieur de la zone de talon (7) par ajustement de l'unité d'aiguisage (1),
**caractérisé en ce qu'**il comprend une plaque support (8) verticale, ajustable parallèlement à l'axe de pneu du pneumatique de véhicule positionné, contre laquelle le pneumatique de véhicule est pressé par l'unité d'aiguisage (1) et qui est réalisée avec un faible frottement sur son côté tourné vers le pneumatique de véhicule.

2. Dispositif selon la revendication 1, **caractérisé en ce que** le côté, tourné vers le pneumatique de véhicule, de la plaque support (8) est muni d'une pluralité de galets omnidirectionnels (9).

3. Dispositif selon la revendication 1, **caractérisé en ce que** l'appareil pour la rotation du pneumatique de véhicule est mis en rotation depuis l'extérieur pendant un processus d'aiguisage du pneumatique de véhicule.

4. Dispositif selon la revendication 1 ou 3, **caractérisé en ce que** l'appareil pour la rotation du pneumatique de véhicule comprend plusieurs, notamment deux, galets (12) pouvant être mis en rotation, sur lesquels le pneumatique de véhicule est positionné de manière axialement parallèle.

5. Dispositif selon l'une quelconque des revendications 1 à 4, **caractérisé en ce que** deux galets libres (4, 5) sont agencés sur la fixation (1a) en orientation axialement parallèle à l'axe de rotation du cylindre d'aiguisage (2), un avant le cylindre d'aiguisage (2) dans la direction d'aiguisage, l'autre derrière le cylindre d'aiguisage (2) dans la direction d'aiguisage.

6. Dispositif selon la revendication 5, **caractérisé en ce que** le galet (4) se trouvant avant le cylindre d'aiguisage (2) dans la direction d'aiguisage est agencé sur la fixation (1a) de telle sorte qu'il rentre en contact tangentiellement avec la zone à aiguiser.

7. Dispositif selon la revendication 5, **caractérisé en ce que** le galet (5) se trouvant derrière le cylindre d'aiguisage (2) dans la direction d'aiguisage est agencé sur la fixation (1a) de telle sorte qu'il rentre en contact tangentiellement avec la zone déjà aiguisée et est par conséquent décalé de la profondeur d'aiguisage (t) par rapport à l'autre galet (4).

8. Dispositif selon l'une quelconque des revendications 1 à 7, **caractérisé en ce qu'**un galet presseur libre (6) est agencé sur la fixation (la), dont l'axe de rotation est parallèle à l'axe de pneu lors d'une orientation perpendiculaire du cylindre d'aiguisage (2) .

9. Dispositif selon la revendication 8, **caractérisé en ce que** la surface extérieure (6a) du galet presseur (6) est incurvée de manière concave.
